Europäisches Patentamt

(19) European Patent Office

Office européen des brevets

(11) Numéro de publication: **0 054 829**
**B1**

(12) **FASCICULE DE BREVET EUROPEEN**

(45) Date de publication du fascicule du brevet:
**10.01.90**

(21) Numéro de dépôt: **81110231.8**

(22) Date de dépôt: **08.12.81**

(51) Int. Cl.⁴: **H 04 L 25/03**

(54) Procédé et dispositif de détection de la séquence d'apprentissage d'un égaliseur autoadaptatif.

(30) Priorité: **12.12.80 FR 8026455**

(43) Date de publication de la demande:
**30.06.82 Bulletin 82/26**

(45) Mention de la délivrance du brevet:
**10.01.90 Bulletin 90/2**

(84) Etats contractants désignés:
**BE DE FR GB IT NL**

(56) Documents cités:
**EP-A- 0 013 343**
**FR-A- 2 352 456**

**R.W. LUCKY et al. "Principes of data communication"**
**1968 McGRAW-HILL BOOK COMPANY NEW YORK (US)**
**pages 88-89**

(73) Titulaire: **ALCATEL CIT, 33, rue Emeriau, F-75015 Paris**
**(FR)**

(72) Inventeur: **de Jaeger, Bogéna, 34, rue de Montmorency,**
**F-75003 Paris (FR)**

(74) Mandataire: **Weinmiller, Jürgen et al,**
**Lennéstrasse 9 Postfach 24, D-8133 Feldafing (DE)**

ACTORUM AG

## Description

La présente invention concerne les systèmes de transmission synchrone de données qui comportent en réception un égaliseur corrigeant les distorsions apportées par la voie de transmission au signal émis et nécessitant, lors de l'établissement d'une liaison, un préréglage d'adaptation à la voie de transmission utilisée se faisant par une transmission préalable d'une séquence d'apprentissage. Elle est relative plus particulièrement aux systèmes de transmission synchrone de données du genre précité qui emploient, lors de l'établissement d'une liaison, un code transformant chaque groupe de n éléments binaires consécutifs en un symbole multivalent, le nombre n étant un entier pouvant se réduire à l'unité de manière à faire correspondre, d'une part, à un groupe de n éléments binaires consécutifs d'un premier état logique, un symbole nul et, d'autre part, à une suite de groupes de n éléments binaires consécutifs du deuxième état logique, une suite de symboles ayant un spectre de fréquence se réduisant pratiquement à une raie de grande amplitude et qui utilisent, pour l'établissement d'une liaison, une procédure d'initialisation dans laquelle la séquence d'apprentissage est précédée d'une séquence de synchronisation se terminant par le codage à l'émission d'une suite de groupes de n éléments binaires du deuxième état logique et comporte à son début au moins un groupe de n éléments binaires du premier état logique codé à l'émission par un symbole nul.

La présente invention permet notamment de détecter le début de la séquence d'apprentissage d'un égaliseur auto-adaptatif appartenant à un système de transmission synchrone conforme aux recommandations de l'avis V 37 du CCITT.

La transmission synchrone de données nécessite, à l'émission, des opérations de brouillage, de codage et éventuellement de modulation, et, à la réception, les opérations inverses: une éventuelle démodulation, un décodage et un débrouillage, ainsi qu'une opération de filtrage ayant pour but de corriger les distorsions engendrées par la voie de transmission.

L'opération de codage est justifiée par les travaux de H. Nyquist qui a montré que la vitesse de transmission à travers un réseau passe-bas idéal ne pouvait dépasser deux impulsions d'informations par hertz de bande passante et que cette limite théorique pouvait être approchée par un filtre passe-bas à coupure progressive et à caractéristique de phase linéaire. Elle consiste en un remplacement des données binaires par des symboles pouvant prendre éventuellement plus de deux valeurs et avoir un débit moindre, et en un filtrage de mise en forme permettant de rapprocher les caractéristiques de la liaison effectuée de celles d'un filtre passe-bas à coupure progressive et à caractéristique de phase linéaire.

L'opération de brouillage a pour but d'éviter la présence, dans le spectre de fréquence du signal transmis, de raies de grande amplitude dues à des suites répétitives dans les données à transmettre et génératrices de bruits d'intermodulation. Elle facilite également certaines opérations en réception comme la récupération du rythme et le réglage du filtre corrigeant les distorsions dues à la voie de transmission. Elle consiste à effectuer, avant le codage, la division de la suite des données binaires synchrones à transmettre par le polynôme de génération d'une suite binaire pseudo-aléatoire, l'opération de débrouillage consistant ensuite à multiplier la suite des données binaires synchrones obtenues par le décodage, par le polynôme de génération utilisé lors de l'opération de brouillage. Le brouilleur est en général réalisé à base d'un filtre linéaire séquentiel récursif et le débrouilleur à base d'un filtre linéaire séquentiel non récursif de structure complémentaire et autosynchronisable. Pour une description détaillée de leur structure on se reportera avantageusement à l'article de J. E. SAVAGE paru dans le BSTJ de février 1967 pages 449 à 487.

L'opération de filtrage ayant pour but de corriger les distorsions dues à la voie de transmission se fait à l'aide d'un filtre dit égaliseur qui est ajusté de manière à obtenir, avec la voie de transmission et compte tenu de la mise en forme réalisée au codage, un comportement gobal pour la liaison se rapprochant de celle d'un filtre passe-bas à coupure progressive et à caractéristique de phase linéaire. Les égaliseurs actuels sont, en règle générale, auto-adaptatifs c'est-à-dire qu'ils s'ajustent automatiquement de manière à rendre minimale l'erreur affectant les symboles reçus avant décodage. L'appréciation de cette erreur, qui conditionne la bonne adaptation d'un égaliseur, nécessite une estimation exacte des symboles émis. Cette estimation peut être déduite des signaux du décodeur lorsque l'erreur affectant les symboles qui lui sont appliqués est suffisamment faible pour ne pas le perturber, c'est-à-dire en fait lorsque l'égaliseur est au voisinage de son réglage optimum. Par contre, lors du réglage initial des coefficients de l'égaliseur, l'erreur ne peut être déduite que d'une connaissance préalable des données émises. C'est pourquoi il est de règle de transmettre, au cours de l'initialisation d'une liaison, une suite de données binaires, dite séquence d'apprentisssage, dont la composition est connue en réception. Celle-ci est une séquence binaire pseudo-aléatoire engendrée à l'émission par le brouilleur dont l'entrée est maintenue à un même niveau logique et, à la réception, par le débrouilleur qui est transformé pour l'occasion, par un jeu de commutations, en brouilleur et dont l'entrée est maintenue à un même niveau logique. Le brouilleur et le débrouilleur qui sont utilisés alors comme deux générateurs identiques et indépendants de suites binaires pseudo-aléatoires perdent leur propriété d'autosynchronisation. Il est cependant nécessaire de synchroniser la séquence d'apprentissage issue du brouilleur, émise, reçue par l'intermédiaire de la voie de transmission et disponible sous forme codée, en sortie de l'égaliseur avec la version codée de la séquence d'apprentissage engendrée à la réception par le débrouilleur car tout décalage entre ces deux séquences d'apprentissage se traduit par un décalage identique des coefficients de l'égaliseur qui ne peut être rattrapé, lors de l'auto-adaptation sur les données, que s'il ne dépasse pas quelques symboles. Il en résulte donc la nécessité de détecter en réception le début d'une séquence d'apprentissage en provenance de l'émetteur.

Une manière connue (FR-A-2 352 456) de procéder consiste à profiter du fait que la séquence d'apprentissage, qui a un spectre de fréquence composé de nombreuses raies d'amplitudes faibles et uniformes, est précédée la plupart du temps d'une séquence de synchronisation consistant en l'émission d'un signal dont le spectre de fréquence est limité à quelques raies de fortes amplitudes permettant la récupération en réception du rythme et éventuellement de la porteuse de modulation, et à déduire l'instant de réception du début de la séquence d'apprentissage en provenance de l'émetteur, de l'instant où le spectre de fréquence du signal reçu se modifie et passe de quelques raies de grandes amplitudes à une multitude de raies d'amplitudes faibles et uniformes. On utilise alors un filtre passe-bande dont la bande passante est telle que l'énergie à la sortie du filtre est très faible pendant la séquence de synchronisation et augmente fortement à partir du début de la séquence d'apprentissage, la mesure de l'énergie à la sortie du filtre permettant de détecter le passage d'une séquence à l'autre. L'inconvénient d'un tel procédé est qu'il utilise une mesure d'énergie nécessitant un temps d'intégration et entraînant une imprécision sur la détection du début de la séquence d'apprentissage, imprécision qui peut atteindre plusieurs dizaines de symboles avec les vitesses actuelles de transmission et qui est incompatible avec les capacités d'auto-adaptation sur les données d'un égaliseur normalement dimensionné.

Pour lutter contre cet inconvénient, il est connu, par la demande de brevet européen EP-A-0 013 343, dans le cas de système de transmission de données par modulation d'amplitude à doubles bandes latérales en quadrature répondant aux recommandations des avis V27 bis et ter du CCITT, d'assimiler la détection du début de la séquence d'apprentissage au passage par un minimum de l'énergie ou de l'amplitude de la composante en phase d'un signal S construit à partir de deux raies aux fréquences $f_c - \frac{1}{2}T$ et $f_c + \frac{1}{2}T$ ($f_c$ étant la fréquence de la porteuse et $1/T$ la cadence baud) présentes dans le signal reçu. Cette méthode de détection, outre le fait qu'elle n'est pas utilisable dans le cadre d'un système de transmission répondant aux recommandations de l'avis V37, met en œuvre des filtres dont les temps d'intégration interviennent dans la précision de la détection du début de la séquence d'apprentissage.

La présente invention a pour but de lutter contre cet inconvénient en profitant des particularités du code et de la procédure d'initialisation employées lors de l'établissement d'une liaison, notamment pour les systèmes de transmission répondant aux recommandations de l'avis V37 du CCITT, pour éviter de faire intervenir des temps de réponse de filtre dans la détection du début de la séquence d'apprentissage.

Ce but est atteint par le dispositif tel qu'il est défini dans la revendication 1. En ce qui concerne des exemples de mise en œuvre préférée de ce dispositif, référence est faite aux sous-revendications.

L'invention ressortira plus clairement de la description ci-après d'un mode de réalisation donné à titre d'exemple. Cette description sera faite en regard du dessin dans lequel:
  – La figure 1 représente le schéma général d'un système de transmission synchrone de données auquel s'applique l'invention.
  – La figure 2 détaille le brouilleur et le débrouilleur représentés à la figure 1 et connus en soi.
  – et la figure 3 représente un dispositif de détection de la séquence d'apprentissage utilisable avec le système de transmission représenté à la figure 1 et conforme à l'invention.

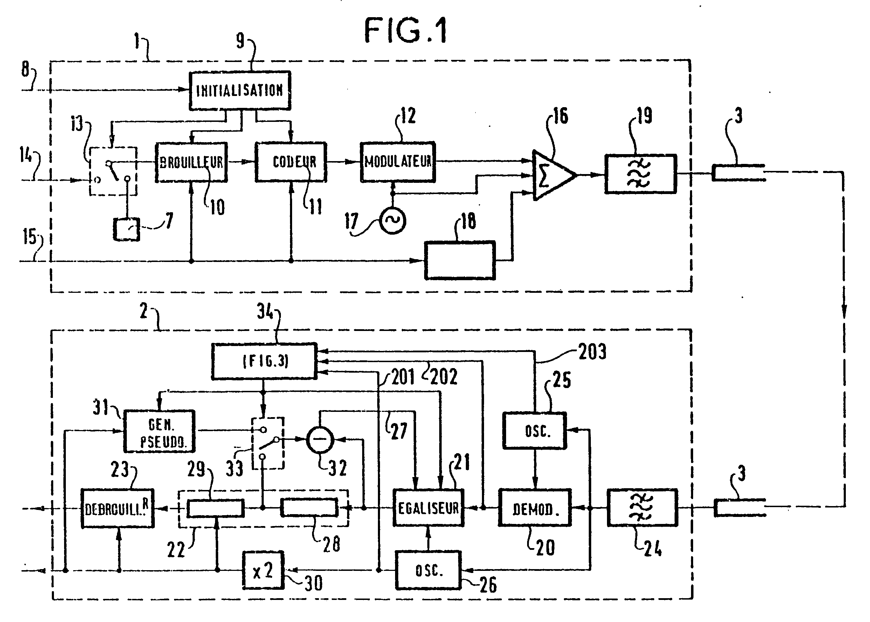

La figure 1 a pour but de situer l'invention dans un tel système de transmission de données dont elle représente de manière très schématique les principaux éléments d'un sens de transmission.

Les systèmes de transmission synchrone de données conformes aux recommandations de l'avis V 37 du CCITT sont des systèmes de transmission bidirectionnelle sur quatre fils ayant un débit binaire de l'ordre de 144 k bit/s dans chaque sens, utilisant un code duobinaire à sept niveaux et une modulation d'amplitude à bande latérale unique plaçant le signal de transmission dans la bande de fréquence 64 kHz 100 kHz d'un groupe primaire B de voies téléphoniques. La transmission se fait dans cette bande de fréquences dans les deux sens, sur deux voies indépendantes.

Un sens de transmission comporte, comme représenté à la figure 1, une partie émission 1 reliée à une partie réception 2 par une voie de transmission 3.

La partie émission 1 comporte essentiellement un brouilleur 10 suivi d'un codeur 11 et d'un modulateur 12.

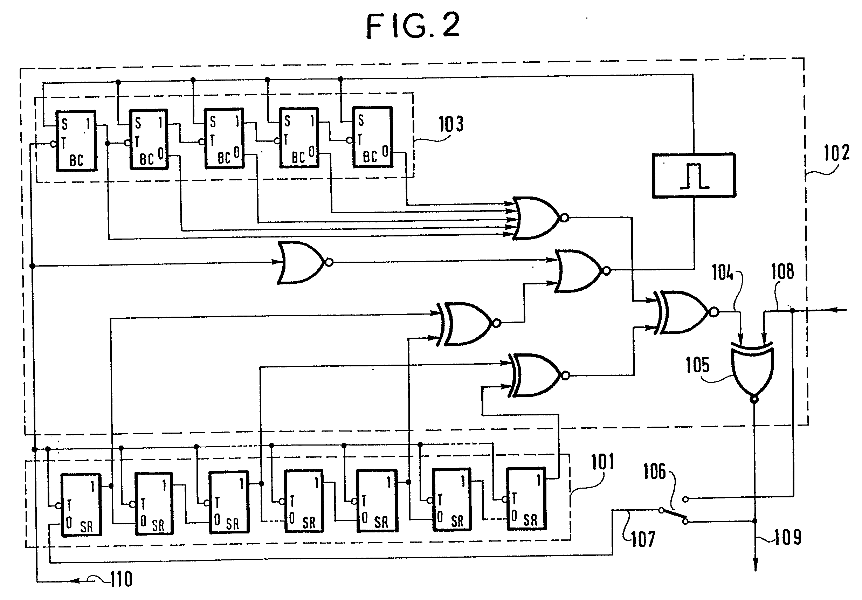

Le brouilleur 10 reçoit, par l'intermédiaire d'un commutateur commandé 13, les données binaires synchrones à émettre appliquées à la cadence de 144 k bit/s sur l'entrée 14 de la partie émission 1. Il sert, comme indiqué précédemment, à éviter au cours de la transmission des données la présence de raies de grande amplitude dans le spectre de fréquence du signal transmis. Il est conforme aux recommandations de l'avis V 37 du CCITT c'est-à-dire qu'il délivre en sortie un bit dont l'état logique est tel qu'il produise une parité impaire lorsqu'il est considéré avec le bit d'entrée du brouilleur et les bits de sortie du brouilleur trois et vingt intervalles de temps bit au préalable, sauf si le brouilleur a délivré au préalable plus de trente et un bits consécutifs de même état logique, auquel cas le bit de sortie du brouilleur est complémenté. Le brouilleur 10 peut avoir la structure proposée dans l'annexe de l'avis V 37 et représentée pour mémoire dans la figure 2. Il comporte alors un registre à décalage à vingt étages 101 qui est rythmé par la cadence des données binaires synchrones à transmettre disponible sur une entrée 15 de la partie émission 1 et qui est muni d'une boucle de réaction 102 incorporant des portes logiques et un compteur binaire à cinq étages 103. L'entrée des données est l'entrée 108 de la porte logique «non ou exclusif» 105, la sortie des données la sortie 109 de cette même porte logique 105 et l'entrée de cadencement sur laquelle est appliquée la cadence bit le conducteur 110 aboutissant aux entrées d'horloge des étages du registre à décalage 101 et du compteur 103.

Le brouilleur 10 peut être utilisé en générateur de séquences binaires pseudo-aléatoires. Dans ce cas, son entrée est connectée, par l'intermédiaire de l'inverseur commandé 13, à la sortie d'un circuit 7 délivrant un état logique 1 constant.

Le brouilleur 10 est complété par des circuits logiques qui sont utiles au cours des procédures d'initialisation et qui permettent d'ouvrir sa boucle de réaction en imposant un état logique 1 à l'entrée 104 de sa porte logique «non ou exclusif» 105, d'imposer un état logique 0 à tous les étages de son registre à décalage 101 et de remettre à un tous les étages de compteur binaire 103. L'ouverture de la boucle de réaction du brouilleur le rend transparent aux données binaires qui lui sont appliquées. Cette propriété est utilisée au début d'une procédure d'initialisation alors que le brouilleur reçoit un état logique 1 constant engendré par le circuit 7. La remise à zéro des étages du registre à décalage et la remise à un des étages du compteur binaire sont utilisées avant de faire fonctionner le brouilleur 10 en générateur de séquence binaire pseudo-aléatoire afin de démarrer ladite séquence à partir d'un état précis. On remarquera que ladite séquence commence toujours par une suite de 31 bits à l'état logique 0 car, au démarrage, les bits présents dans le troisième et le vingtième étages du registre à décalage 101, à l'état logique 0, et le bit appliqué à l'entrée du brouilleur, à l'état logique 1, entraînent un bit à l'état logique 0 à la sortie du brouilleur 10. Cette situation se perpétuerait si le compteur n'avançait pas d'un coup à chaque intervalle bit et n'intervenait pas pour changer l'état logique du trente-deuxième bit.

Le codeur 11 représenté à la suite du brouilleur 10 sur la figure 1 transforme les données binaires synchrones délivrées à la cadence de 144 K bit/s par le brouilleur 10 en une suite de symboles se succédant à la cadence baud R de 72 k bit/s avec un spectre limité à la bande de fréquence 0 à 36 kHz. Il utilise le code duobinaire à sept niveaux recommandé par l'avis V 37 du CCITT. Ce genre de code utilise des superpositions linéaires de réponses

du type $\dfrac{\sin(\omega_1 t)}{\omega_1 t}$ $\omega_1$ étant la demi-pulsation baud,

$$\omega_1 = \pi R$$

avec des combinaisons d'amplitudes différentes. Cette mise en forme, réalisée entièrement au codage selon les recommandations de l'avis V 37 du CCITT, permet d'approcher pour la liaison les caractéristiques d'un filtre passe-bas à coupure progressive et à caractéristique de phase linéaire à la condition que la voie de transmission ait, dans la bande utile, une réponse plate en amplitude et linéaire en phase. Le code duobinaire à sept niveaux recommandé dans l'avis V 37 du CCITT ainsi que les circuits pour l'obtenir sont bien connus dans la technique. Pour des détails à son sujet on se reportera utilement au livre de R. W. Lucky, J. Salz et E. J. Weldon intitulé: «Principles of Data Communication» publié en 1968 par Mc Graw Hill. Pour la compréhension de la suite de la description, il suffit de retenir qu'il fait correspondre à deux groupes de deux bits successifs un symbole d'amplitude 0, $\pm$ 1, $\pm$ 2, $\pm$ 3, un groupe de deux bits d'état logique 0 étant transformé en un symbole d'amplitude nulle, une succession de bits d'état logique 1 étant transformée en une suite de paires de symboles de même amplitude 2 alternativement positives et négatives, présentant un spectre de fréquence se réduisant pratiquement à une raie de forte amplitude au quart de la cadence des symboles c'est-à-dire à 18 kHz.

Le codeur est en outre muni d'une commande de mise à zéro utilisée dans les procédures d'initialisation.

Le modulateur 12 qui suit le codeur 11 reçoit les symboles issus de ce dernier et une porteuse à 100 kHz engendrée par un oscillateur 17. Il effectue une modulation en bande latérale unique inférieure et décale les symboles de la bande des fréquences 0–36 kHz à celle des fréquences 64 kHz – 100 kHz d'un groupe primaire B de voies téléphoniques.

La sortie du modulateur 12 aboutit à un sommateur 16 qui permet d'ajouter aux symboles en bande transposée une onde pilote de porteuse à la fréquence de 100 kHz délivrée par l'oscillateur 17 et une onde pilote de rythme à la fréquence de 64 kHz liée à la cadence des symboles R par la relation:

100 – R/2 et engendrée par un générateur 18 à partir de la cadence des données binaires appliquée à l'entrée 15 de la partie émission 1. Le sommateur 16 est connecté en sortie à un filtre passe-bande 19 qui limite le spectre du signal émis à la bande de fréquence transmise par la voie de transmission 3.

La partie émission 1 est complétée par un circuit de commande d'initialisation 9 qui contrôle l'inverseur commandé 13, l'ouverture de la boucle de réaction du brouilleur 10, la remise à zéro des étages de son registre à décalage et la remise à un des étages de son compteur, et la mise à zéro du codeur. Ce circuit de commande d'initialisation permet, sur une requête appliquée à l'entrée 8 de la partie émission, de déclencher une procédure d'initialisation conforme aux recommandations de l'avis V 37 du CCITT. Après une telle requête, il commence par commander pendant 10 240 intervalles baud la mise à zéro du codeur 11, l'ouverture de la boucle de réaction du brouilleur 10, la mise à zéro des étages de son registre à décalage ainsi que la remise à un des étages de son compteur, et la connexion de l'entrée du brouilleur 10 sur la sortie du circuit 7 qui délivre un état logique 1 constant. Il en résulte l'émission, au début d'une procédure d'initialisation, d'un signal de transmission ne comportant que les pilotes de porteuse et de rythme à 100 kHz et à 64 kHz. Après les 10 240 intervalles baud il supprime la mise à zéro du codeur 11 et cela pendant 4096 intervalles baud. Le brouilleur 10 étant transparent aux données qu'il reçoit (état logique 1 constant en provenance du circuit 7), le codeur reçoit des données binaires synchrones d'état logique 1 constant et délivre, comme mentionné précédemment, une suite de paires de symboles de même amplitude 2 alternativement positives et négatives dont le spectre de fréquence se réduit pratiquement à une raie à 18 kHz transposée à 82 kHz par le modulateur 12 et venant s'ajouter aux pilotes de porteuses et de rythme. Ces deux premières étapes de la procédure d'initialisation constituent une séquence de synchronisation pour la partie réception 2. Au bout des 14 336 intervalles baud le circuit de commande d'initialisation ferme la boucle de réaction du brouilleur 10 et supprime la remise à zéro des étages de son registre à décalage et la remise à un des étages de son compteur. Le brouilleur 10 engendre alors une séquence binaire pseudo-aléatoire qui commence par une suite de zéros. Cette séquence est codée dans le codeur 11, puis modulée par le modulateur 12 et utilisée dans la partie réception comme séquence d'apprentissage pour l'égaliseur auto-adaptatif corrigeant les distorsions dues à la voie de transmission. Enfin, au bout de 276 480 intervalles baud maximum, le circuit de commande d'initialisation fait basculer l'inverseur commandé 13 et connecte l'entrée du brouilleur à celle 14 de la partie émission 1 sur laquelle les données binaires synchrones à transmettre sont appliquées.

La partie réception 2 comporte essentiellement un démodulateur 20, un égaliseur 21, un décodeur 22 et un débrouilleur 23.

Le démodulateur 20 reçoit les symboles dans la bande de fréquence 64 kHz − 100 kHz en provenance de la voie de transmission par l'intermédiaire d'un filtre passe-bande 24 arrêtant le bruit hors bande et d'un circuit de contrôle automatique de gain non représenté, et une porteuse de démodulation à 100 kHz engendrée par un oscillateur 25 verrouillé en phase sur le pilote de modulation à 100 kHz présent dans le signal transmis. Il replace les symboles reçus dans la bande de base 0−36 kHz.

L'égaliseur auto-adaptatif 21 reçoit les symboles issus du démodulateur 20 et en élimine les interférences dues à leur passage dans la voie de transmission. Il nécessite l'application sur une entrée 27 d'un signal d'erreur utilisé pour son auto-adaptation par ses asservissements internes. Sa structure est de type connu. C'est par exemple un filtre transversal à domaine de temps avec un retard unitaire d'un intervalle baud (durée d'un symbole) et des asservissements tendant à ajuster ses coefficients de pondération de manière à minimiser l'erreur quadratique moyenne, comme celui décrit dans l'article de R. W. Lucky et H. R. Rudin intitulé «An Automatic Equalizer for General Purpose» paru dans la revue B.S.T.J. pages 2179 à 2208, novembre 1967. Il reçoit alors, d'un oscillateur 26, la cadence des symboles de 72 kHz récupérée à partir du pilote de rythme à 64 kHz présent dans le signal transmis.

Le décodeur 22 se compose essentiellement d'un circuit de décision 28 et d'un encodeur binaire 29. Le circuit de décision 28 compare le niveau de chaque symbole délivré par l'égaliseur auto-adaptatif 21 avec sept seuils 0, ± 1, ± 2, ± 3 et retient le seuil le plus proche. L'encodeur binaire 29 délivre la paire de digits correspondant au seuil retenu dans le codage duobinaire à sept niveaux utilisé à l'émission. Il délivre les digits de chaque paire en une suite synchrone à la cadence bit de 144 kHz qui lui est fournie par un circuit doubleur de fréquence 30 à partir de la cadence des symboles de 72 kHz récupérée par l'oscillateur 26.

Le débrouilleur 23 déduit, de la suite des données binaires synchrones engendrée par le décodeur 22, les données binaires synchrones provenant de l'entrée 14 de la partie émission 1. Sa structure est adaptée à celle du brouilleur 10 d'émission. C'est par exemple celle qui est proposée en annexe de l'avis V 37 du CCITT et qui se déduit du schéma de la figure 2 en déplaçant le strap 106 pour lui faire relier l'entrée 107 du registre à décalage 101 avec celle 108 de la porte logique «non ou exclusif» 105 et non, comme représenté, avec la sortie 109 de ce même circuit.

La partie réception 2 (figure 1) comporte en outre: un générateur de niveaux pseudo-aléatoires 31, un soustracteur 32, un commutateur commandé 33 et un dispositif 34 de détection d'arrivée d'une séquence d'apprentissage dans le signal reçu permettant de fournir à l'égaliseur 21 le signal de départ nécessaire à son auto-adaptation.

Le générateur de niveaux pseudo-aléatoires 31 comporte un brouilleur identique à celui 10 de la partie émission, avec une entrée donnée portée constamment à l'état logique 1, une entrée de cadencement recevant la cadence bit délivrée par le circuit doubleur de fréquence 30, ainsi que des circuits logiques permettant d'imposer une remise à zéro des étages de son registre à décalage et une remise à un des étages de son compteur. Le brouilleur peut également être réalisé par un jeu de commutations à partir du débrouilleur 23 de la partie réception. Le générateur de niveaux pseudo-aléatoires 31 comporte en outre un codeur duobinaire à sept niveaux qui est connecté à la suite du brouilleur et qui assure le même codage que le codeur 11 de la partie émission à l'exception de la mise en forme devenue inutile, c'est-à-dire qui délivre uniquement des niveaux 0, ± 1, ± 2, ± 3 et non des symboles en

$$\frac{\sin(\omega_1 t)}{\omega_1 t}$$

d'amplitudes relatives $0, \pm 1, \pm 2, \pm 3$.

Le soustracteur 32 a sa sortie reliée à l'entrée 27 de signal d'erreur de l'égaliseur auto-adaptatif 21, une première entrée connectée à la sortie de ce dernier et une deuxième entrée connectée, par l'intermédiaire de l'inverseur commandé 33, soit à la sortie du générateur de niveaux pseudo-aléatoires 31, soit à celle du circuit de décision 28 du décodeur 22.

Le circuit de détection d'une séquence d'apprentissage 34 contrôle l'inverseur commandé 33, le générateur de niveaux pseudo-aléatoires 31 et l'égaliseur auto-adaptatif 21. En dehors des périodes d'apparition, en sortie de l'égaliseur auto-adaptatif 21, de séquences d'apprentissage en provenance de la partie émission, il commande la mise à zéro des étages du registre à décalage et la mise à un des étages du compteur du générateur de niveaux pseudo-aléatoires 31 l'inverseur commandé 33 de manière à connecter l'entrée du soustracteur 32 à la sortie du circuit de décision 28 et il indique à l'égaliseur auto-adaptatif 21 que l'asservissement a lieu sur les données, cette indication étant utilisée dans l'égaliseur pour limiter la vitesse des asservissements assurant son adaptation. Pendant les périodes d'apparition, en sortie de l'égaliseur auto-adaptatif 21, de séquences d'apprentissage en provenance de la partie émission 1, il supprime la mise à zéro des étages du registre à décalage et la mise à un des étages du compteur du générateur de niveaux pseudo-aléatoires 31 pour le laisser dérouler sa séquence et il contrôle l'inverseur commandé 33 de manière à connecter l'entrée du soustracteur 32 à la sortie du générateur de niveaux pseudo-aléatoires 31. La détection de l'apparition des séquences d'apprentissage ne se fait pas à la sortie de l'égaliseur auto-adaptatif 21 mais à l'entrée de ce dernier, le dispositif de détection 34 tenant compte du retard pris par les séquences en sortie de l'égaliseur auto-adaptatif 21 en raison du temps de traitement de ce dernier. Elle se fait en présence du pilote de porteuse à la fréquence de 100 kHz détecté par l'oscillateur 25 et conformément au procédé selon l'invention.

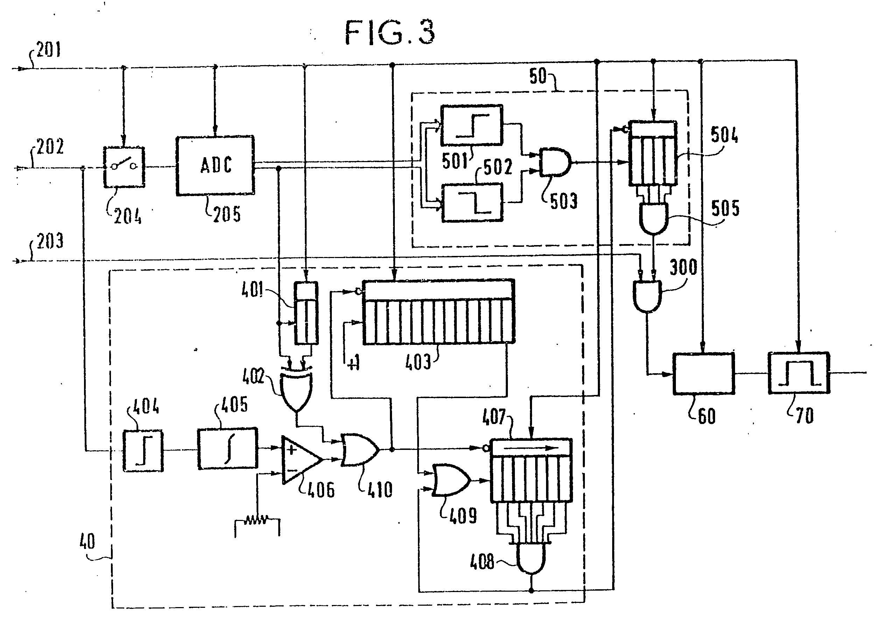

La figure 3 représente un mode de réalisation numérique du dispositif de détection d'une séquence d'apprentissage 34 en détaillant plus particulièrement les parties assurant la mise en œuvre du procédé selon l'invention. Ce dispositif comporte trois entrées de signal, une première entrée 201 sur laquelle est appliquée la cadence des symboles (récupérée par l'oscillateur 26 figure 1), une deuxième entrée 202 sur laquelle est appliqué le signal reçu démodulé mais non égalisé (disponible à la sortie du démodulateur 20 figure 1) et une troisième entrée 203 sur laquelle est appliqué un signal logique indiquant la réception de la porteuse de modulation par l'oscillateur (25 figure 1) engendrant la porteuse de démodulation en réception. Le signal reçu, démodulé mais non égalisé, est converti en échantillons numériques, à la cadence des symboles par un échantillonneur bloqueur 204 suivi d'un convertisseur analogique-numérique ADC 205 qui ne font pas partie du dispositif de détection des séquences d'apprentissage proprement dit mais sont en fait disposés devant l'égaliseur auto-adaptatif (21 figure 1) réalisé sous forme numérique. Le dispositif de détection de séquence d'apprentissage 34 comporte un filtre numérique 40, à bande étroite, centré sur la fréquence de 18 kHz recevant en entrée le signal constitué des symboles reçus mais non égalisés disponibles sur l'entrée 202 ou à la sortie du convertisseur analogique-numérique ADC 205, un circuit numérique de détection de bas niveau d'amplitude 50 analysant le signal de sortie du convertisseur analogique-numérique ADC 205 sous le contrôle du filtre numérique 40, un circuit temporisateur 60 déclenché par le circuit numérique de détection de niveau 50 en cas de réception du pilote de porteuse et un circuit monostable 70 excité par le circuit temporisateur 60 et conservant son état excité pendant une durée suffisante pour permettre à l'égaliseur de donner à ses coefficients leurs valeurs optimales.

Le dispositif de détection de séquence d'apprentissage 34 utilise les propriétés du signal émis pendant la deuxième partie d'une séquence de synchronisation et correspondant au codage à l'émission d'une suite de groupes de deux éléments binaires 1 en une suite de paires de symboles d'amplitude 2 alternativement positives et négatives et au début d'une séquence d'apprentissage correspondant au codage à l'émission d'une suite de 31 éléments binaires 0 dont les premières paires sont codées en symboles nuls. Ce signal émis qui correspond dans un premier temps à une fréquence pure puis, dans un deuxième temps, à un signal nul est insensible aux interférences intersymboles et n'a pas de ce fait à être égalisé. Pour détecter le début d'une séquence d'apprentissage il faut détecter la première annulation du signal formé des symboles reçus mais non égalisé suivant la détection de la raie de grande amplitude à 18 kHz et se maintenant pendant la durée d'au moins un symbole. En fait, en raison des bruits parasites, il n'y a pas annulation du signal reçu mais une chute importante de son amplitude absolue et on admet que le signal formé des symboles reçus mais non égalisés s'annule dès que son amplitude est comprise entre les niveaux de codage $\pm 1$. L'échantillonnage à la cadence des symboles utilisé ici n'est pas suffisant pour permettre d'affirmer qu'un échantillon du signal formé des symboles reçus mais non égalisés avec une amplitude comprise entre les niveaux de codage $\pm 1$ correspond nécessairement à une chute d'amplitude absolue pour ledit signal se maintenant pendant au moins la durée d'un symbole car l'instant d'échantillonnage peut tomber au voisinage d'un passage par zéro du signal de synchronisation à 18 kHz correspondant à la raie de grande amplitude. Pour lever ce doute il serait possible de doubler la fréquence d'échantillonnage et de ne prendre en compte que le premier de deux échantillons successifs dont les amplitudes restent comprises entre les niveaux ± 1. Dans le cas présent, il n'est pas nécessaire d'user de cette possibilité car la séquence d'apprentissage débute par une série de 31 bits zéro qui sont codés à l'émission par une suite de symboles nuls et l'on se contente de détecter dans le signal formé des symboles reçus mais non égalisés le premier de deux échantillons, pris à la cadence des symboles, ayant des amplitudes comprises entre les niveaux de codage ± 1. Ces deux échantillons correspondent nécessairement à un ou deux symboles nuls car, s'ils appartenaient au signal de synchronisation à 18 kHz, l'un d'entre eux aurait une amplitude supérieure au niveau de codage + 1 ou inférieure au niveau de codage − 1. Ce procédé de détection donne une imprécision d'un symbole sur le début de la séquence d'apprentissage ce qui est sans inconvénient pour l'auto-adaptation des coefficients de la plupart des égaliseurs. Il reste utilisable avec une séquence d'apprentissage ne débutant que par deux symboles nuls consécutifs c'est-à-dire par deux groupes consécutifs d'éléments binaires codés à l'émission en deux symboles nuls. Dans le cas présent il serait utilisable avec une séquence d'apprentissage débutant par quatre zéros seulement.

Le filtre numérique 40, qui détecte la raie à 18 kHz présente dans le signal formé des symboles reçus mais non égalisés pendant la deuxième partie d'une séquence de synchronisation, comporte un discriminateur de fréquence ne prenant en compte que les bits de polarité des échantillons numériques délivrés par le convertisseur analogique-numérique ADC 205 et un circuit de détection de présence de symboles reçus non nuls recevant le signal d'entrée du convertisseur analogique-numérique 205.

· Le discriminateur de fréquence est formé d'un premier registre à décalage 401 à deux étages recevant sur son entrée série de données le bit de polarité des échantillons délivrés par le convertisseur analogique-numérique ADC 205, et sur son entrée d'horloge, la cadence des symboles à 72 kHz présente à l'entrée·201, et d'une porte logique «ou exclusif» 402 à deux entrées, l'une connectée à l'entrée série de données du premier registre à décalage 401, l'autre à la sortie du deuxième étage de ce même registre à décalage 401. La porte logique «ou exclusif» 402 délivre un état logique 1 lorsque ses entrées ont la même parité ce qui est le cas en présence d'un signal à 18 kHz dont les échantillons à 72 kHz ont leur polarité s'inversant une fois sur deux. Les propriétés de filtrage d'un tel discriminateur de fréquence s'expriment par la probabilité d'avoir un état logique 1 en sortie de la porte logique «ou exclusif» 402 en fonction du rapport entre la fréquence du signal d'entrée et celle du signal d'horloge du registre à décalage. C'est une fonction en dents de scie bien connue de l'art antérieur. On pourra se reporter pour son étude à l'article de J. OSWALD intitulé «Détection numérique par échantillonnage» et paru dans la revue Câbles et Transmission, Vol. 21°A, N° 1, 1967, pages 20 à 38. Cette fonction montre que la bande passante du discriminateur est assez large. Pour la réduire on s'astreint à vérifier la constance du niveau logique 1 en sortie de la porte logique «ou exclusif» 402 à l'aide d'un deuxième registre à décalage 403 dont elle commande l'entrée complémentée de remise à zéro par l'intermédiaire d'une porte logique «ou» 410 et qui reçoit sur son entrée série de données un état logique 1 constant et sur son entrée d'horloge la cadence des symboles à 72 kHz disponible sur l'entrée 201.

Le circuit de détection de présence de symboles reçus non nuls se compose d'un limiteur absolu 404 écrêtant les polarités du signal formé des symboles reçus mais non égalisés présent sur l'entrée 202, suivi d'un intégrateur 405 par exemple à résistance capacité et d'un comparateur à seuil réglable 406 dont la sortie est connectée par l'intermédiaire de la porte logique «ou» 410 à l'entrée complémentée de remise à zéro du deuxième registre à décalage 403. Ce comparateur à seuil réglable 406 délivre un état logique 0 remettant à zéro les étages du deuxième registre à décalage 403 chaque fois que la moyenne de l'amplitude absolue du signal formé par les symboles reçus mais non égalisés est inférieure à son seuil.

Le filtre numérique 40 comporte en sortie un troisième registre à décalage 407 ayant les sorties de ses étages reliées aux entrées d'une porte logique «et» 408 délivrant le signal de sortie du filtre, son entrée complémentée de remise à zéro connectée en parallèle sur celle du deuxième registre à décalage 403, son entrée d'horloge connectée en parallèle sur celles des premier et deuxième registres à décalage 401 et 403, et son entrée série de données connectée à la sortie du dernier étage du deuxième registre à décalage 403 par l'intermédiaire d'une porte logique «ou» 409 ayant une entrée connectée à la sortie du filtre 40 pour maintenir par rétroaction la sortie du filtre 40 à l'état logique 1 dès que ce dernier a été atteint. Ce troisème registre à décalage 407 contribue également à la réduction de la largeur de la bande passante du filtre 40.

Le circuit de détection de bas niveau d'amplitude 50 comporte un circuit de décision simplifié connecté à la sortie du convertisseur analogique-numérique ADC 205 indiquant si les échantillons numériques délivrés sont compris entre les niveaux de codage ± 1. Ce circuit de décision est formé de deux comparateurs numériques 501 et 502 engendrant en sortie un état logique 1, l'un 501 lorsque l'échantillon numérique qui lui est soumis est inférieur au niveau de codage + 1, l'autre 502 lorsque l'échantillon numérique qui lui est soumis est supérieur au niveau de codage − 1, et d'une porte logique «et» 503 à deux entrées réunissant leur sortie.

Le circuit de détection de bas niveau d'amplitude 50 comporte également un registre à décalage 504 à quatre étages dont l'entrée série de données est connectée à la sortie de la porte logique «et» 503, dont l'entrée d'horloge reçoit la cadence des symboles de 72 kHz disponible sur l'entrée 201, dont l'entrée complémentée de remise à zéro est connectée à la sortie du filtre 40 constituée par celle de la porte logique «et» 408, et dont les sorties des étages sont connectées aux entrées d'une porte logique «et» 505 délivrant le signal de sortie du circuit de détection de bas niveau d'amplitude 50. Ce registre à décalage 504 est bloqué par le filtre 40 tant qu'une raie de grande amplitude à 18 kHz n'a pas été détectée. Il permet, en coopération avec la porte logique «et» 505 de ne laisser passer la sortie du circuit de détection de bas niveau d'amplitude 50 à l'état logique 1 que si quatre échantillons successifs d'amplitudes comprises entre les niveaux de codage $\pm$ 1 lui ont été appliqués après détection de la raie de grande amplitude à 18 kHz par le filtre 40. L'utilisation de quatre échantillons successifs au lieu des deux théoriquement nécessaires est possible en raison de la longue suite de zéros débutant la séquence d'apprentissage et assure une très bonne réjection des bruits.

Une porte logique «et» 300 à deux entrées, l'une connectée à la sortie de la porte logique «et» 505, l'autre à l'entrée 203 empêche la prise en compte d'un état logique 1 à la sortie du circuit de détection de bas niveau d'amplitude 50 en l'absence de la réception du pilote de modulation.

Le circuit de temporisation 60 est déclenché par l'apparition d'un état logique 1 en sortie de la porte logique «et» 300. Il compense le retard pris dans l'égaliseur auto-adaptatif par la séquence d'apprentissage en provenance de l'émetteur. Comme cette compensation peut également se faire à l'aide du registre à décalage du générateur de séquence pseudo-aléatoire de réception 31 (figure 1) la compensation ne joue que sur quelques symboles et peut être réalisée à l'aide d'un registre à décalage rythmé par la cadence des symboles de 72 kHz.

Le circuit monostable 70 est déclenché par l'apparition d'un niveau logique 1 en sortie du temporisateur 60 et présente un délai suffisant pour permettre l'autoréglage des coefficients de l'égaliseur auto-adaptatif. Ce délai étant inférieur à la durée d'une séquence d'apprentissage, l'égaliseur auto-adaptatif termine son auto-adaptation sans le secours du générateur de séquence pseudo-aléatoire de réception 31 (figure 1) à l'aide des signaux d'erreur pris aux bornes du circuit de décision 28 (figure 1) ce qui lui permet de corriger un éventuel décalage de ses coefficients avant la transmission proprement dite des données.

On peut, sans sortir du cadre de l'invention, modifier certaines dispositions ou remplacer certains moyens par des moyens équivalents. On peut notamment disposer le dispositif de détection des séquences d'apprentissage après l'égaliseur à condition de donner au coefficient de sa prise principale la valeur 1 et à ses autres coefficients la valeur 0 pendant la séquence de synchronisation.

**Revendications**

1. Dans la partie réception d'un système de transmission synchrone de données qui utilise au cours de l'initialisation d'une liaison un code transformant chaque groupe de n éléments binaires consécutifs en un symbole multivalent, le nombre n étant un entier pouvant se réduire à l'unité, de manière à faire correspondre d'une part, à un groupe de n éléments binaires d'un premier état logique, un symbole nul et d'autre part, à une suite de groupes de n éléments binaires du deuxième état logique, une suite de symboles ayant un spectre de fréquence pratiquement réduit à une raie de grande amplitude, qui comporte dans sa partie réception un égaliseur auto-adaptatif nécessitant un préréglage à l'aide d'une séquence d'apprentissage et qui emploie une procédure d'initialisation dans laquelle la séquence d'apprentissage est précédée d'une séquence de synchronisation se terminant par le codage à l'émission d'une suite de groupes de n éléments binaires consécutifs du deuxième état logique et comporte à son début au moins un groupe de n éléments binaires consécutifs du premier état logique codé à l'émission par un symbole nul, un dispositif de détection du début de la séquence d'apprentissage de l'égaliseur auto-adaptatif, caractérisé en ce qu'il comporte:

– un filtre à bande étroite (40) qui reçoit en entrée le signal formé des symboles reçus mais non égalisés, qui est centré sur la fréquence de la raie à grande amplitude résultant du codage à l'émission d'une suite de groupes de n éléments binaires du deuxième état logique, et qui délivre un signal de sortie dès que la raie de grande amplitude est présente dans le signal formé par les symboles reçus mais non égalisés pendant une durée s'étendant sur plusieurs dizaines de symboles et que l'amplitude absolue moyenne dudit signal formé par les symboles reçus mais non égalisés dépasse, pendant cette même durée, une valeur de seuil prédéterminée,

– et un circuit de détection de bas niveau d'amplitude (50) qui reçoit en entrée le signal formé des symboles reçus mais non égalisés, qui est débloqué par le signal de sortie dudit filtre (40) lorsque ce dernier détecte la raie de grande amplitude et qui délivre en sortie un signal repérant les périodes de bas niveau d'amplitude absolue d'une durée au moins égale à celle d'un symbole, la première période ainsi détectée correspondant à la réception du premier symbole nul d'une séquence d'apprentissage.

2. Dispositif selon la revendication 1 pour un système de transmission synchrone de données qui utilise un code duobinaire transformant chaque groupe de deux éléments binaires successifs en un symbole pouvant prendre sept niveaux d'amplitude 0, $\pm$ 1, $\pm$ 2, $\pm$ 3 et faisant correspondre d'une part, à un groupe de deux éléments binaires successifs d'un premier état logique, un symbole nul et, d'autre part, à une suite de groupes de deux éléments binaires successifs d'un deuxième état logique, des paires de symboles successifs d'amplitude 2 alternativement positives et négatives ayant un spectre de fréquence se réduisant pratiquement à une raie de grande amplitude au quart de la cadence des symboles et qui comporte, dans sa partie récepteur, un circuit (204) délivrant à la cadence des symboles des échantillons du signal formé par les symboles reçus mais non égalisés, caractérisé en ce que ledit filtre (40) à bande étroite comporte:

– un discriminateur numérique de fréquence formé d'un premier registre à décalage à deux étages (401) recevant sur son entrée série de données le bit de polarité des échantillons et sur son entrée d'horloge la cadence des échantillons, d'une porte logique «ou exclusif» (402) connectée en entrée à l'entrée série et à la sortie du deuxième étage du registre à décalage (401), et d'un deuxième registre à décalage (403) recevant sur son entrée série de données un état logique 1 constant, sur son entrée d'horloge la cadence des échantillons et sur une entrée complémentée de remise à zéro le signal de sortie de la porte logique «ou exclusif» (402)

– et un circuit à seuil (404, 405, 406) sensible à l'amplitude absolue moyenne du signal formé des symboles reçus mais non égalisés et remettant ledit deuxième registre à décalage (403) à zéro tant que ladite amplitude absolue reste inférieure à un certain seuil, sa sortie étant raccordée à l'entrée complémentée de remise à zéro dudit deuxième registre (403) par l'intermédiaire d'une porte logique «ou» (410).

3. Dispositif selon la revendication 1 pour un système de transmission synchrone de données utilisant une séquence d'apprentissage comportant à son début au moins deux groupes successifs de n éléments binaires du premier état codés à l'émission par deux symboles nuls et comportant dans sa partie réception un circuit (204) délivrant à la cadence des symboles, des échantillons, du signal formé par les symboles reçus mais non égalisés, ledit dispositif étant caractérisé en ce que le circuit de détection (50) de bas niveau d'amplitude comporte:

– des moyens de comparaison (501, 502) lui permettant d'isoler les échantillons dont l'amplitude se trouve comprise entre deux limites autour de l'amplitude nulle,

– et des moyens de sélection (504, 505) débloqués par le filtre lorsque ce dernier détecte une raie de grande amplitude et sensibles à l'apparition d'au moins deux échantillons successifs à bas niveau d'amplitude, l'instant d'apparition du premier des deux échantillons étant pris pour l'instant du début d'une séquence d'apprentissage.

4. Dispositif selon la revendication 3 pour un système de transmission synchrone de données qui utilise un code duobinaire transformant chaque groupe de deux éléments binaires successifs en un symbole pouvant prendre sept niveaux d'amplitude 0, $\pm$ 1, $\pm$ 2, $\pm$ 3 et faisant correspondre d'une part, à un groupe de deux éléments binaires successifs d'un premier état logique, un symbole nul et, d'autre part, à une suite de groupes de deux éléments binaires successifs d'un deuxième état logique, des paires de symboles successifs d'amplitude 2 alternativement positives et négatives ayant un spectre de fréquence se réduisant pratiquement à une raie de grande amplitude au quart de la cadence des symboles et qui comporte, dans sa partie réception, un circuit (204) délivrant, à la cadence des symboles, des échantillons du signal formé des symboles reçus mais non égalisés, ledit dispositif étant caractérisé en ce que le circuit de détection de bas niveau d'amplitude comporte:

– des moyens de comparaison formés d'un circuit à seuils lui permettant d'isoler les échantillons dont l'amplitude est comprise entre $\pm$ 1 et de les repérer en délivrant en sortie un état logique 1

– et des moyens de sélection formés par un registre à décalage (504) ayant au moins deux étages et par une porte logique «et» (505) dont les entrées sont reliées aux sorties des étages du registre à décalage (504) ce dernier ayant en outre une entrée série de données reliée à la sortie des moyens de comparaison, une entrée d'horloge sur laquelle est appliquée la cadence des échantillons et une entrée de remise à zéro commandée par le filtre (40) assurant la détection de la raie de grande amplitude.

## Claims

1. A device for detecting the beginning of a training sequence in the receiver portion of a synchronous data-transmission system which uses, when initializing a link, a code that transforms each group of n consecutive bits into a multivalent symbol, where n is an integer admitted to be reduced to unity, so as to establish correspondance, on the one hand, between a group of n consecutive first logic state bits and a null symbol, and, on the other hand, between a sequence of groups of n consecutive second logic state bits and a sequence of symbols having a frequency spectrum which is substantially reduced to a single large-amplitude spectrum line; which system comprises in its receiver portions a self-adapting equalizer requiring an initial adjustment by means of a training sequence, and which uses an initialization procedure, wherein the training sequence is preceded by a synchronizing sequence terminating by coding at the transmission end of a sequence of groups of n consecutive second logic state bits, and which comprises at its beginning at least one group of n first logic state bits coded on transmission in the form of a null symbol, characterized in that this device further includes:

– a narrow-band filter (40) which receives the signal formed by the received but not yet equalized symbols and centred on the frequency of the large-amplitude spectrum line resulting from coding on transmission of a succession of groups of n second logic state bits, and which delivers an output signal as soon as the large-amplitude spectrum line is present in the signal formed by the received but not yet equalized symbols during a period of several tens of symbols, and as soon as during this same period, the average absolute amplitude of said signal exceeds a predetermined threshold value;

– a low amplitude detector circuit (50) whose input receives the signal formed by the received but not yet equalized symbols, which is enabled by the output filter of said signal (40) when the latter detects the large-amplitude spectrum line, and which delivers an output signal which locates periods of low absolute amplitude level that last at least as long as one symbol, the first period thus detected corresponding to the reception of the first null symbol of a training sequence.

2. A device according to claim 1 for a synchronous data transmission system which uses a duobinary code transforming each group of two successive bits into a symbol which can assume anyone of seven amplitude levels, namely 0, +1, −1, +2, −2, +3, −3; and which on the one hand makes a group of two successive first logic state bits correspond to a null symbol and which on the other hand makes a sequence of groups of two second logic state bits correspond to pairs of consecutive symbols of amplitude 2 which are alternately positive and negative and whose frequency spectrum is substantially reduced to a single large-amplitude spectrum line whose frequency is equal to one fourth of the symbol frequency; and which system comprises in its receiver portion a circuit (204) adapted to deliver, at symbol frequency, samples of the signal constituted of the received but not yet equalized symbols, characterized in that said narrow-band filter (40) includes:

− a digital frequency discriminator (401) formed by a first two stage shift register whose series data input receives the polarity bit of the samples, and whose clock input receives the sample frequency, by an «EXCLUSIVE OR» logic gate (402) with its input connected to said series input and to the output of the second stage of the shift register (401), and by a second shift register (403) whose series data input receives a fixed logic 1 state, while its clock input receives the sample frequency and a complemented reset to zero input receives the output signal of the «EXCLUSIVE OR» logic gate (402); and

− a threshold circuit (404, 405, 406) sensitive to the average absolute amplitude of the signal formed by the received but not yet equalized symbols and resetting to zero said second shift register (403) for as long as said absolute amplitude remains lower than a given threshold, its output being connected to the complemented reset to zero input of said second shift register (403) via an «OR» logic gate (410).

3. A device according to claim 1 for a synchronous data transmission system using a training sequence which has at its beginning at least two successive groups of n first logic state bits coded on transmission by two null symbols and including in its receiver portion a circuit (204) which delivers, at the symbol frequency, samples of the signal constituted of the received but not yet equalized symbols, characterized in that the low amplitude level detection circuit (50) comprises:

− comparator means (501, 502) to enable it to isolate samples whose amplitudes lie between two limits one on either side of zero amplitude; and

− selection means (504, 505) enabled by the filter when the latter detects a large-amplitude spectrum line, said means being sensitive to the appearance of at least two low amplitude level samples, the instant of appearance of the first of the two samples being taken as the instant of the beginning of a training sequence.

4. A device according to claim 3 for a synchronous data transmission system which uses a duobinary code transforming each group of two successive bits into a symbol which can assume any one of seven amplitude levels, namely 0, +1, −1, +2, −2, +3, −3; and which makes, on the one hand, a group of two successive first logic state bits correspond to a null symbol and which makes, on the other hand, a sequence of groups of second logic state bits correspond to pairs of consecutive symbols of amplitude 2 which are alternately positive and negative and whose frequency spectrum is substantially reduced to a single large-amplitude spectrum line whose frequency is equal to one fourth of the symbol frequency; and which system comprises in its receiver portion a circuit (204) adapted to deliver, at symbol frequency, samples of the signal, which is constituted of the received but not yet equalized symbols; characterized in that the low amplitude level detection circuit comprises:

− comparator means formed by a threshold circuit to enable it to isolate samples whose amplitudes lie between +1 and −1 and to locate them by delivering a logic 1 state at its output; and

− selection means formed by a shift register (504) which has at least two stages and by an «AND» logic gate (505) whose inputs are connected to the outputs of the stages of the shift register (504), this shift register also having a series data input connected to the output of the comparator means, a clock input to which is applied the sample frequency and a reset to zero input controlled by the filter (40) ensuring the detection of the large-amplitude spectrum line.

**Patentansprüche**

1. Schaltung zur Erfassung des Anfangs der Lernfolge des selbstanpassenden Entzerrers im Empfangsteil eines synchronen Datenübertragungssystems, das bei der Initialisierung einer Verbindung einen Kode verwendet, der jede Gruppe von n aufeinanderfolgenden Bits in ein mehrwertiges Symbol umwandelt, wobei die Zahl n ganzzahlig ist und sich auf den Wert 1 reduzieren kann, derart, daß einerseits einer Gruppe von n Bits eines ersten logischen Zustandes ein Symbol 0, und andererseits einer Folge von Gruppen von n Bits des zweiten logischen Zustandes eine Folge von Symbolen mit einem sich praktisch auf eine Spektrallinie mit großer Amplitude reduzierenden Frequenzspektrum gleichgesetzt wird, wobei das Empfangsteil einen selbstanpassenden Entzerrer aufweist, der eine Voreinstellung mithilfe einer Lernfolge erfordert und eine Initialisierungsprozedur anwendet, bei welcher der Lernfolge eine Synchronisationsfolge vorausgeht, die mit der sendeseitigen Kodierung einer Folge von Gruppen von n aufeinanderfolgenden Bits des zweiten logischen Zustandes endet und an ihrem Anfang mindestens eine einzelne Gruppe von n Bits des ersten logischen Zustandes, sendeseitig als Symbol 0 kodiert, aufweist, dadurch gekennzeichnet, daß die Schaltung aufweist:

   – ein schmalbandiges Filter (40), das das aus dem empfangenen, noch nicht entzerrten Symbolen bestehende Eingangssignal empfängt, auf die Frequenz der Spektrallinie großer Amplitude aufgrund der sendeseitigen Kodierung einer Folge von Gruppen von n aufeinanderfolgenden Bits des zweiten logischen Zustandes zentriert ist, und ein Ausgangssignal liefert, sobald die Spektrallinie großer Amplitude in dem aus den empfangenen, aber noch nicht entzerrten Symbolen bestehenden Signal während einer Dauer auftritt, die sich über zig Symbole erstreckt, und sobald die mittlere Absolutamplitude des aus den empfangenen, aber noch nicht entzerrten Symbolen bestehenden Signals während dieser selben Dauer einen vorherbestimmten Schwellwert überschreitet, und

   – eine Schaltung (50) zur Erfassung niedriger Amplitudenpegel, die eingangsseitig das aus den empfangenen, aber noch nicht entzerrten Symbolen bestehende Signal empfängt, die vom Ausgangssignal des Filters (40) freigegeben wird, wenn das Filter die Spektrallinie großer Amplitude erkennt, und die ein Ausgangssignal liefert, das die Perioden niedriger Absolutamplitudenpegel einer Dauer erfaßt, die mindestens derjenigen eines Symbols entspricht, wobei die erste der so erfaßten Perioden dem Empfang des ersten Symbols «0» einer Lernfolge entspricht.

   2. Schaltung nach Anspruch 1 für ein synchrones Datenübertragungssystem, das einen duobinären Kode verwendet, der jede Gruppe von zwei aufeinanderfolgenden Bits in ein Symbol umwandelt, welches einen von sieben Amplitudenwerte 0, +1, −1, +2, −2, +3, −3 annehmen kann und der einerseits ein einer Gruppe von zwei aufeinanderfolgenden Bits eines ersten logischen Zustandes ein Symbol «0» und andererseits einer Folge von Gruppen von zwei aufeinanderfolgender Bits eines zweiten logischen Zustandes aufeinanderfolgende Symbolpaare mit abwechselnd positiver und negativer Amplitude 2 zuordnet, die ein Frequenzspektrum besitzen, das sich praktisch auf eine Spektrallinie großer Amplitude mit ¼ der Symbolfrequenz reduziert, wobei das System in seinem Empfangsteil eine Schaltung (204) aufweist, die mit der Symboltaktfrequenz Tastproben des aus den empfangenen, aber noch nicht entzerrten Symbolen bestehenden Signals liefert, dadurch gekennzeichnet, daß das schmalbandige Filter (40) aufweist:

   – einen digitalen Frequenzdiskriminator, bestehend aus einem zweistufigen ersten Schieberegisters (401), das an seinem Datenserieneingang das Polaritätsbit der Tastproben und an seinem Takteingang die Taktfrequenz der Tastproben empfängt, aus einem logischen «exklusiv ODER»-Tor (402), das eingangsseitig an den Serieneingang und an den Ausgang der zweiten Stufe des Schieberegisters (401) angeschlossen ist, und aus einem zweiten Schieberegisters (403), das an seinem Datenserieneingang einen konstanten Logikzustand 1, an seinem Takteingang die Taktfrequenz der Tastproben, und an einem komplementären Nullrückstelleingang das Ausgangssignal des logischen «exklusiv ODER»-Tors (402) empfängt, und

   – eine Schwellenschaltung (404, 405, 406), die auf die mittlere Absolutamplitude des aus den empfangenen, aber noch nicht entzerrten Symbolen bestehenden Signals anspricht und das zweite Schieberegister (403) solange auf Null zurückgestellt hält, wie die Absolutamplitude unterhalb einer bestimmten Schwelle bleibt, wobei der Ausgang dieser Schwellenschaltung über ein logisches «ODER»-Tor (410) an den komplementären Nullrückstelleingang des zweiten Registers (403) angeschlossen ist.

   3. Schaltung nach Anspruch 1 für ein synchrones Datenübertragungssystem, das eine Lernfolge verwendet, die an ihrem Anfang mindestens zwei aufeinanderfolgende Gruppen von n Bits des ersten logischen Zustandes, sendeseitig durch zwei 0-Symbole kodiert, aufweist, und das in seinem Empfangsteil eine Schaltung (204) aufweist, die mit der Symboltaktfrequenz Tastproben des aus den empfangenen, aber noch nicht entzerrten Symbolen bestehenden Signals liefert, dadurch gekennzeichnet, daß die Schaltung (50) zur Erfassung niedriger Amplitudenpegel aufweist

   – Vergleichsmittel (501, 502) die der Schaltung gestatten, diejenigen Tastproben zu isolieren, deren Amplitude zwischen zwei Grenzwerten um die Nullamplitude liegen; und

   – Auswahlmittel (504, 505) die durch das Filter freigegeben sind, wenn es eine Spektrallinie großer Amplitude erfaßt, und die auf das Auftreten mindestens zweier aufeinanderfolgender Tastproben mit geringem Amplitudenpegel ansprechen, wobei der Zeitpunkt des Auftretens der ersten der beiden Tastproben als Zeitpunkt des Beginns einer Lernfolge gilt.

   4. Schaltung nach Anspruch 3 für ein synchrones Datenübertragungsystem, das einen duobinären Kode verwendet, der jede Gruppe von zwei aufeinanderfolgenden Bits in ein Symbol umwandelt, welches sieben Amplitudenwerte 0, +1, −1, +2, −2, +3, −3 annehmen kann und der einerseits einer Gruppe von zwei aufeinanderfolgenden Bits eines ersten logischen Zustandes ein 0-Symbol und andererseits einer Folge von Gruppen von zwei aufeinanderfolgender Bits eines zweiten logischen Zustandes aufeinanderfolgende Symbolpaare mit abwechselnd positiver und negativer Amplitude 2 zuordnet, die ein Frequenzspektrum besitzen, das sich praktisch auf eine Spektrallinie großer Amplitude mit ¼ der Symbolfrequenz reduziert, wobei das System in seinem Empfangsteil eine Schaltung (204) aufweist, die mit der Symboltaktfrequenz Tastproben des aus den empfangenen, aber noch nicht entzerrten Symbolen bestehenden Signals liefert, dadurch gekennzeichnet, daß die Schaltung zur Erfassung niedriger Amplitudenpegel

– Vergleichsmittel bestehend aus Schwellenkreisen, die es der Schaltung gestatten, diejenigen Tastproben zu isolieren, deren Amplitude zwischen +1 und −1 liegt, und sie durch Liefern des Logikzustandes 1 an den Ausgang zu erfassen, und

– Auswahlmittel bestehend aus einem Schieberegister (504) mit mindestens zwei Stufen und aus einem logischen «UND»-Tor (505) aufweist, dessen Eingänge an die Ausgänge der Stufen des Schieberegisters (504) angeschlossen sind, wobei dieses weiter einen an den Ausgang der Vergleichsmittel angeschlossenen Datenserieneingang, einen Takteingang, an den die Taktfrequenz der Tastproben angelegt ist, und einen Nullrückstelleingang besitzt, von denen letzterer durch das Filter (40) gesteuert wird, welches der Erfassung der Spektrallinie großer Amplitude dient.

FIG.1

FIG.2

102
108
109
104
105
106
107
101
103
110

FIG.3